# EUROPEAN PATENT SPECIFICATION

(11) **EP 4 037 149 B1**
(45) Date of publication and mention of the grant of the patent: **11.11.2026**
(21) Application number: 21154545.4
(22) Date of filing: 01.02.2021
(51) Int. Cl.: H02K 1/18, H02K 5/173, H02K 7/08, H02K 21/22, H02K 7/14, F04D 25/06, F04D 29/26

(54) **EC MOTOR, FAN WITH EC MOTOR, AND HOUSEHOLD APPLIANCE**
EC-MOTOR, LÜFTER MIT EC-MOTOR UND HAUSHALTSGERÄT
MOTEUR PAS À PAS (EC), VENTILATEUR DOTÉ D'UN MOTEUR EC, ET APPAREIL DOMESTIQUE

(43) Date of publication of application: 03.08.2022
(73) Proprietor: BSH Hausgeräte GmbH, 81739 München (DE)
(72) Inventor: Blaz, Robert, 06601 Humenne (SK); Farkas, Viliam, 07101 Michalovce (SK); Kuco, Martin, 07101 Michalovce (SK)

(56) References cited:
- EP-A1- 1 009 086
- DE-U1- 202013 101 018
- US-A- 5 334 895
- US-A1- 2008 232 983
- US-A1- 2012 057 966
- US-A1- 2014 356 054
- US-A1- 2015 333 592
- US-A1- 2018 235 103
- US-A1- 2020 403 469
- US-B1- 6 674 204
- US-B2- 10 253 676

## Description

The present invention concerns an electronically commutated (EC) motor and a fan comprising an EC motor. The invention further concerns a household appliance comprising an EC motor or even a fan with an EC motor.

Electronically commutated motors (briefly: "EC motors") are synchronous direct current electric motors typically comprising a rotor and a stator. The rotor includes permanent magnets configured to rotate about coils comprised by the stator.

Such EC motors are used in various applications. In particular, EC motors may be included in pumps or in fans of ventilation systems.

Document WO 2019/166333 A1 discloses a brushless electric motor, whose rotor has a permanent magnet magnetized in the manner of a Halbach arrangement, wherein the rotor magnet is an injection-moulded part containing embedded magnetically anisotropic magnet material.

From document EP 2 236 838 A1, a radial fan comprising an electronically commutated direct current motor is known, whose stator sits rotationally fixed on a support part embodied as an elongated bearing axle, wherein the rotor is formed from a ground ring and rotatably supported on the support part.

The document US 5 334 895 A discloses a motor according to the preamble of claim 1.

It is an object of the present invention to provide an alternative EC motor, which may be manufactured so as to be particularly compact. It is a further object to provide an improved fan and an improved household appliance.

The object is solved by an EC motor according to claim 1, by a fan according to claim 7 and by a household appliance according to claim 10. Advantageous embodiments are disclosed in the dependent claims, the description and the figures.

An EC motor according to the present invention is disclosed in claim 1.

As is to be noted, unless otherwise specified, the term "radial" as well as the expressions "axial" and "circumference direction" (and their respective linguistic derivations) in this document always relate to a designated axis of rotation of the rotor.

The bearing system supporting the rotor case thus is at least partially encompassed by the stator (which preferably comprises one or more stator stack(s) and magnet wires (coils)). The intermediate element, which is a separate constructional component of the EC motor, serves to connect the stator to the shaft, in a manner leaving space for at least a portion of the bearing system. Such construction allows a particularly space-saving, compact assembly of the EC motor. In particular, a radially innermost portion of the rotor case may extend into an interior space surrounded by the stator.

Preferably, the one or more permanent magnets of the rotor is/are arranged in a radial circumference (i.e., radially outside) of the stator. That is, the one or more permanent magnets of the rotor are advantageously configured to spin about at least a portion of the stator.

Considered in radial direction, at least a portion of the stator (in particular, of one or more coils comprised by the stator) is preferably arranged between (at least a portion of) the bearing system and the one or more permanent magnet(s).

The EC motor is designed as an outrunner.

The intermediate element of an EC motor according to the present invention may advantageously serve as a barrier for vibrations, in particular for vibrations originating from the stator (in particular from a stator stack thereof), thus inhibiting or at least damping the vibration's propagation to the motor shaft and possibly one or more further connected components. The intermediate element may thus serve as a buffer for such vibrations.

The intermediate element separates the stator and the shaft, such that these elements thus have no direct contact. The intermediate element is of a different material than the shaft. The intermediate element is at least partially be made of a resilient material, in particular of a plastic material.

A connection of the intermediate element with the shaft is configured to absorb vibrations. Said connection is resilient in a designated direction of rotation of the rotor (i.e., in circumference direction).

Such resilience of the connection of the intermediate element with the shaft is larger in circumference direction than in axial direction. The stiffness of the intermediate element connected to the shaft is smaller in direction normal to the rotation than in axial direction.

The intermediate element may comprise a (preferably cylindrical) sleeve portion the shaft may penetrate and which may abut on the shaft.

According to advantageous embodiments, the intermediate element comprises a portion extending between the stator and the rotor case (when considered in radial direction). Thereby, a particularly solid fixation of the stator and nevertheless a compact assembly of the EC motor can be achieved.

Preferably, the intermediate element is fixed to a stator surface which faces the shaft. In particular, the intermediate element may preferably be fixed to an inner diameter of at least one stator stack of the stator. Such embodiments provide for a particularly advantageous radial fixation of the stator ensuring a stable distance of the stator and the bearing system supporting the rotor and being at least partially encompassed (surrounded) by the stator.

According to advantageous embodiments of the present invention, the intermediate element is at least partially built as a plastic overmoulding. In particular, such intermediate element may provide an insulation between one or more coil(s) and at least one stator stack of the stator.

The rotor case of the EC motor according to an embodiment of the present invention may advantageously at least partially be made of metal; in particular, it may comprise a deep drawn metal part. Such rotor case may fulfil various functions, as it provides for a particularly advantageous conduction of magnetic flux, facilitates an advantageous connection to a fan wheel, bears the one or more permanent magnet(s), and bears the bearing system, thus insuring rotation about the shaft.

The deep drawn metal part advantageously makes a ground ring of the rotor dispensable; accordingly, the EC motor according to preferred embodiments is devoid of a ground ring.

Preferably, the motor case is a monolithic component.

The rotor case may comprise a cylindrical portion (whose centre axis may preferably coincide with the centre axis of the shaft) surrounding at least a part of the stator. In particular, the rotor case may preferably be shaped as a ring component, wherein at least a portion of such ring component may preferably have U-shaped cross sections in axial direction.

In such embodiments, the permanent magnet(s) may preferably be fixed to a radially inner surface of said cylindrical portion. Thereby, a particularly close proximity of the rotated permanent magnets and the stator can be achieved.

The at least one permanent magnet is preferably an anisotropic ferrite magnet. In particular, the rotor may comprise a plurality of permanent segment magnets. Some or all of these segment magnets may anisotropic segment ferrite magnets.

A radially innermost portion of the rotor case (such as radially inner support portion rotatably held by the bearing system) may extend into an interior space surrounded by (at least a portion of) the stator.

According to preferred embodiments of the present invention, the EC motor is a multiphase EC motor, in particular a three-phase EC motor.

Preferably, the EC motor is devised for a household appliance. It may be configured to drive a fan. In particular, the rotor case may be configured to be connected to a fan wheel.

The household appliance may be constructed for cooling or drying purposes in a respective environment, or to extract gas (which may include fume, steam and/or airborne grease, for example). Said fan may be included in a device such as a computer, a consumer electronics, a refrigerator, a kitchen hood or a vacuum cleaner, for instance.

A fan according to the present invention comprises an EC motor according to an embodiment of the present invention, and a fan wheel connected to the rotor case of the EC motor.

The fan wheel may comprise an overmoulding of at least a portion of the rotor case (comprised by the rotor of the EC motor). In such case, at least one hole and/or recess may preferably be included in the rotor case, and the fan wheel may comprise at least one bulge overlapping (and preferably engaging with) the at least one hole / recess. Thereby, a form fit connection of the fan wheel and the rotor case may be implemented, by means of the which form fit connection a transfer of torque from the EC motor to the fan wheel may be realised. Additionally or alternatively, such transfer of torque may be realised by a friction connection of the overmoulding and the rotor case. Preferably, the overmoulding is at least partially made of plastic.

Additionally or alternatively, the fan wheel may comprise a metal sheet, which may be connected to the rotor case by means of a press fit connection. In particular, in such embodiments, the fan wheel may be a metal sheet fan wheel.

A household appliance according to the present invention comprises an EC motor according to an embodiment of the present invention. In particular, the household appliance may comprise a fan according to an embodiment of the present invention. The household appliance may be a computer, a consumer electronics, a refrigerator, a kitchen hood or a vacuum cleaner, for instance.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a - 1c:: different views of an exemplary embodiment of an EC motor according to the present invention;
- Fig. 2:: a portion of an EC motor according to an alternative embodiment of the present invention;
- Fig. 3:: the magnetic flux in an exemplary embodiment of an EC motor according to the present invention;
- Fig. 4a, 4b:: different views of an exemplary embodiment of a fan according to the present invention;
- Fig. 5a, 5b:: different views of a rotor case - fan wheel - combination of an exemplary fan according to the present invention.

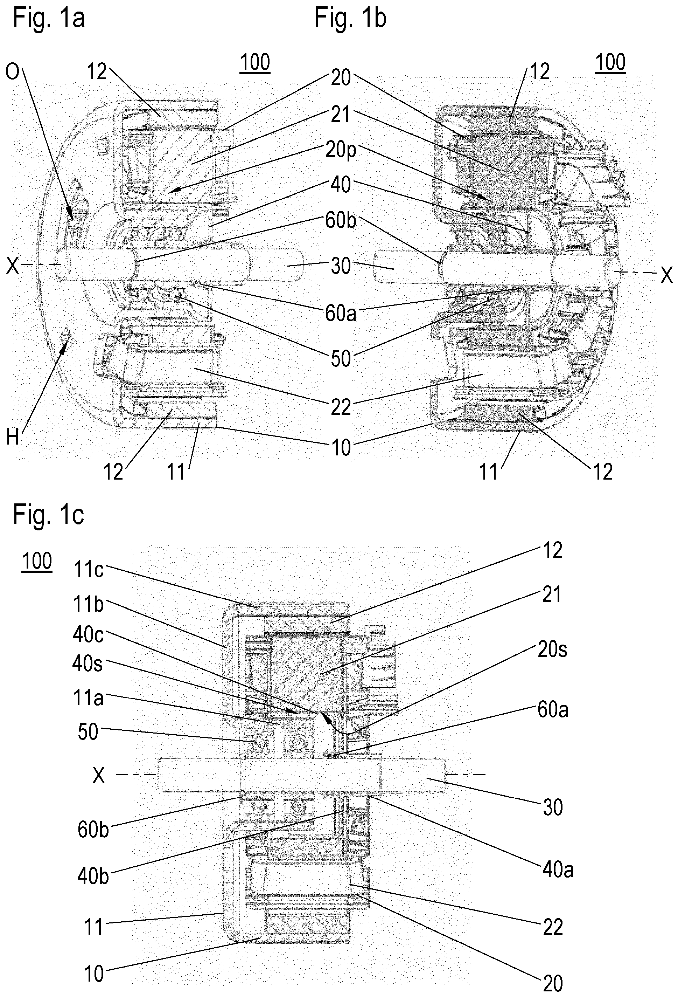

Figures 1a - 1c show respective sections of an exemplary EC motor 100 according to an embodiment of the present invention. Namely, Figures 1a, 1b each provide a perspective view of the EC motor 100 cut open, and Figure 1c is a cross section along the designated axis of rotation X of the rotor 10.

The EC motor 100 comprises a rotor 10, a stator 20, a shaft 30, an intermediate element 40 and a bearing system 50. The rotor 10 comprises a rotor case 11 holding a plurality of permanent magnets (segments) 12. The bearing system 50, which in the exemplary embodiment depicted comprises a ball bearing, supports the rotor case 11 so as to be rotatable about the shaft 30 and, thereby, to a longitudinal centre axis X thereof. Thereby, the permanent magnets 12 fixed to the rotor case 11 are rotatable about the shaft 30 and about the stator 20 comprising stator stack 21 and coils 22, the stator 20 being connected to the shaft by the intermediate element 40. A portion 20p of the stator 20 is arranged in a radially outer circumference of the bearing system 50, and - considered in radial direction - between the bearing system 50 and the permanent magnets 12.

A retaining system comprising spring 60a and holding ring 60b arranged at opposite sides (in axial direction) of the bearing system 50 serves to secure an appropriate axial preload.

As indicated in Figure 1c, the intermediate element 40 comprises a sleeve portion 40a the shaft 30 penetrates. The sleeve portion 40a abuts on the shaft 30. Preferably, a connection of the sleeve portion 40a with the shaft 30 is configured to absorb vibrations originating, when the EC motor 100 is in operation, from the stator 20. For instance, the connection may be resilient in rotation direction.

The sleeve portion 40a protrudes in axial direction from a spacer portion 40b of the intermediate element 40, which spacer portion 40b extends in radial direction. In the exemplary embodiment depicted in Figures 1a - 1c, the spacer portion 40b is formed as a ring-shaped slice; according to alternative (not shown) embodiments it may (additionally or alternatively to a slice) comprise one or more spoke element/s. At a radially outer circumference, the spacer portion 40b passes into a connector portion 40c connected to a stator surface 20s facing the shaft 30.

In the exemplary embodiment shown, the connector portion 40c has a cylindrical shape, whose centre axis coincides with a centre axis X of the shaft 30 (and thus with the designated axis of rotation of the rotor 10). A surrounding section 40s of the connector portion 40c surrounds a part of the bearing system 50 supporting the rotor case 11 of the rotor 10. In the embodiment shown, the surrounding section 40s extends (radially) between the stator 20 and the rotor case 11.

As further indicated in Figure 1c, the rotor case 11 of the exemplarily depicted embodiment of the present invention has (essentially) U-shaped cross sections in axial direction. It comprises a radially inner support portion 11a rotatably supported by the bearing system 50. The support portion 11a includes a cylindrical region whose centre axis coincides with the centre axis X of the shaft 30. Radially outside of the support portion 11a, the rotor case 11 comprises a magnet holder portion 11c holding (on a surface facing the shaft 30) the permanent magnets 12. In the present case, the magnet holder portion 11c has a cylindrical shape with its centre axis coinciding with the centre axis X of the shaft 30. In particular, the support portion 11a and the magnet holder portion 11c are coaxial.

At its end facing away (in axial direction) from the intermediate element 40, the rotor case 11 is delimited by a face portion 11b. The face portion extends in radial direction, in the case shown along a plane which is orthogonal to the shaft 30 (i.e., it extends only in radial direction). In the embodiment depicted, the face portion 11b is formed as a slice; according to alternative (not shown) embodiments it may (additionally or alternatively to a slice) comprise one or more spoke component/s.

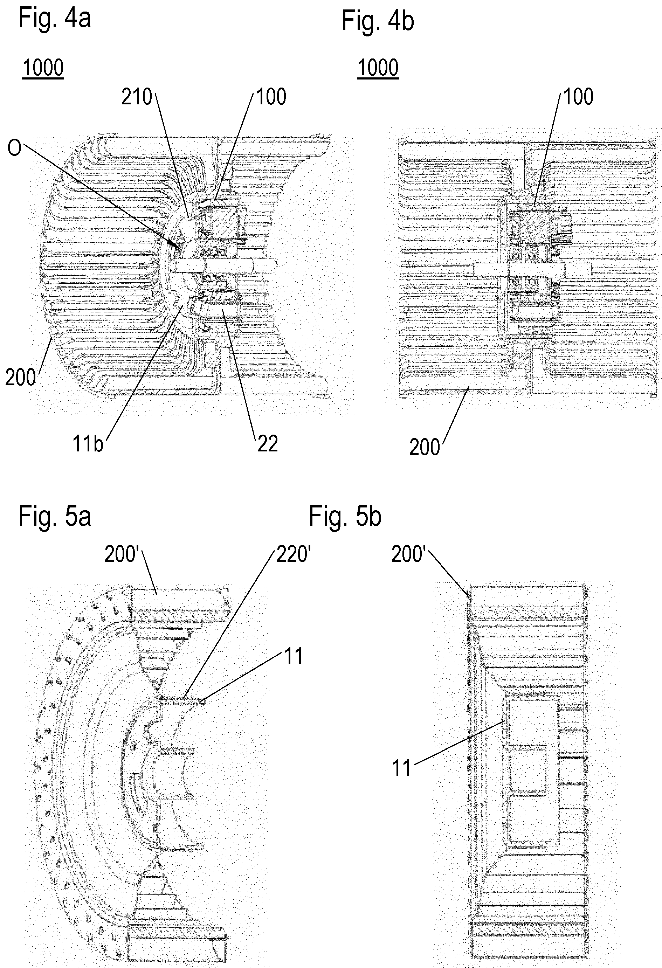

As can be seen in Figure 1a, the face portion 11b includes openings O which may serve for cooling the coils 22 of the stator. Moreover, the face portion 11b of the embodiment depicted comprises a plurality of holes H serving as overmoulding openings for connection with a fan wheel (see Figure 4a, where the holes are covered by bulges 210).

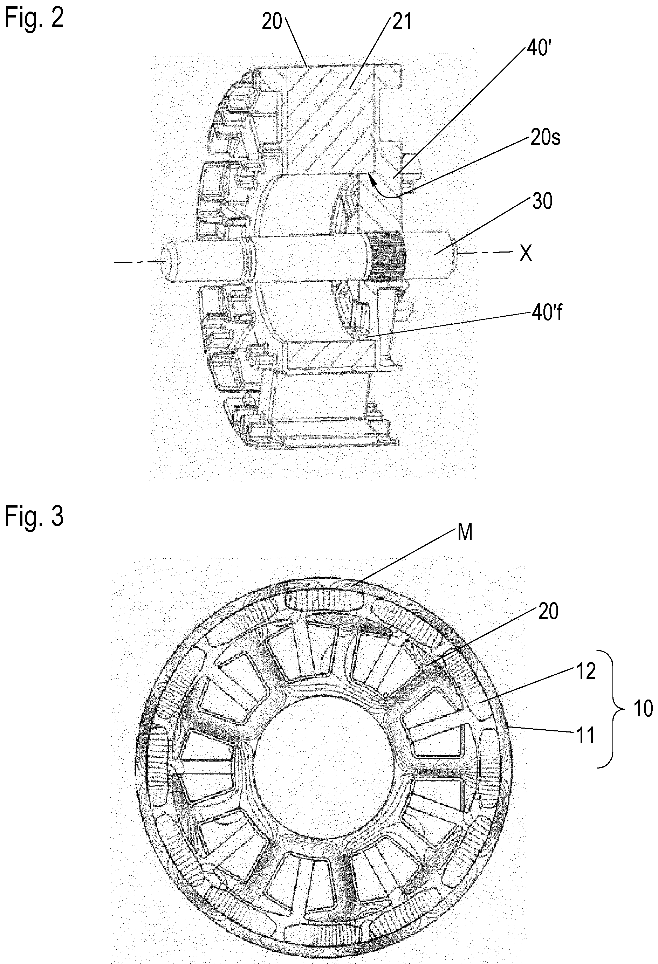

Figure 2 provides an insight in components of an alternative EC motor according to the present invention is. In this case, the intermediate element 40' is implemented as an overmoulding part, which preferably is at least partially made of plastics.

In this embodiment, the stator 20 is connected to the intermediate element 40' both in axial direction and in radial direction. In particular, the intermediate element 40' comprises a flange portion 40'f connected to a stator surface 20s facing the shaft 30.

Figure 3 illustrates, with axial viewing direction, a magnetic flux M occurring in a rotor 10 and a stator 20 of an electric EC motor according to the present invention.

By Figures 4a, 4b, different insights in a fan 1000 according to an embodiment of the present invention are given. The fan 1000 comprises an EC motor 100 in accordance with the embodiment shown in Figures 1a - 1c of the present invention. Moreover, the fan 1000 comprises a fan wheel 200, which is connected to the rotor case 11 at the face portion 11b thereof by means of an overmoulding (preferably at least partially of plastic material). Therein, bulges 210 of the fan wheel 200 overlap and engage (not visible) with the holes H (indicated in Figure 1a) of the face portion 11b. Thereby, a transfer of torque from the EC motor 100 to the fan wheel 200 can be realised. Additionally, a friction connection of the overmoulding and the rotor case 12 may facilitate the torque transfer.

As is further seen in Figure 4a, openings O in the face portion 11b of the rotor case are kept free from the overmoulding. As a consequence, these openings serve as air passages for cooling the coils 22 of the stator.

Figures 5a, 5b provide insights in components of a fan according to an alternative embodiment of the present invention. Therein, the fan wheel 200' comprises a metal sheet connected to the rotor case 11, at a flange portion 220' of the fan wheel 200', by a press fit connection.

Disclosed is an EC motor 100 comprising a rotor 10, a stator 20, a shaft 30, a bearing system 50 and an intermediate element 40, 40' connecting the stator 20 to the shaft 30. The rotor 10 includes a rotor case 11 and one or more permanent magnets 12, and it is supported, by the bearing system 50, so as to be rotatable about the shaft 30. The stator 20 is at least partially arranged, by means of the intermediate element 40, 40', in a radially outer circumference of the bearing system 50.

Further disclosed is a fan 1000 comprising such EC motor 100 and a fan wheel 200, 200' connected to the rotor case 11 of the rotor 10 of the EC motor 100.

Moreover, a household appliance comprising an EC motor 100 or even a fan 1000 including an EC motor 100 is disclosed.

### Reference signs

- 10: rotor
- 11: rotor case
- 11a: support portion
- 11b: face portion
- 11c: magnet holder portion
- 12: permanent magnet

- 20: stator
- 20p: stator portion arranged in a radially outer circumference of the bearing system 50
- 20s: stator surface facing the shaft
- 21: stator stack
- 22: coil

- 30: shaft

- 40, 40': intermediate element
- 40a: sleeve portion
- 40b: spacer portion
- 40c: connector portion
- 40'f: flange portion
- 40s: surrounding section

- 50: bearing system

- 60a: spring
- 60b: holding ring

- 100: EC motor

- 200, 200': fan wheel
- 210: bulge
- 220': flange portion
- 1000: fan

- H: hole
- M: magnetic flux
- O: opening
- X: designated axis of rotation/ longitudinal centre axis of the shaft 30

## Claims

1. Electronically commutated (EC) motor (100), designed as an outrunner motor, comprising
- a rotor (10) comprising a rotor case (11) and one or more permanent magnet/s (12) which are fixed to the rotor case (11),
- a stator (20),
- a shaft (30),
- a bearing system (50) rotatably supporting the rotor case (11) about the shaft (30), and
- an intermediate element (40, 40') connecting the stator (20) to the shaft (30) so that the stator (20) is at least partially arranged in a radially outer circumference of the bearing system (50), whereby the intermediate element (40, 40') separates the stator (20) and the shaft (30), such that these elements thus have no direct contact,
- and wherein the intermediate element (40, 40') is of a different material than the shaft (30), whereby the intermediate element (40, 40') is at least partially made of a resilient material, in particular of a plastic material,
- **characterized in that**, a connection of the intermediate element (40, 40') with the shaft (30) is configured to absorb vibrations, wherein said connection is configured to be resilient in a designated direction of rotation of the rotor,i.e., in circumferential direction, and whereby the resilience of the connection of the intermediate element (40, 40') with the shaft (30) is larger in the circumferential direction than in the axial direction, and wherein the stiffness of the intermediate element (40, 40') connected to the shaft (30) is smaller in a direction normal to the direction of rotation than in the axial direction.

2. EC motor according to claim 1, wherein the intermediate element (40) comprises a portion extending between the stator (20) and the rotor case (11).

3. EC motor according to one of claims 1 or 2, wherein the intermediate element (40, 40') is fixed to a stator surface (20s) which faces the shaft (30).

4. EC motor according to one of the preceding claims, wherein the intermediate element (40') is at least partially built as a plastic overmoulding.

5. EC motor according to one of the preceding claims, wherein the rotor case (11) is at least partially made of a deep drawn metal part.

6. EC motor according to one of the preceding claims, wherein the one ore more permanent magnet/s (12) comprise/s at least one anisotropic ferrite magnet.

7. Fan (1000) comprising an EC motor (100) according to one of the preceding claims, and a fan wheel (200) connected to the rotor case (11) of the EC motor (100).

8. Fan according to claim 7, wherein the fan wheel (200) comprises an overmoulding of at least a portion of the rotor case (11).

9. Fan according to one of claims 7 or 8, wherein the fan wheel (200') comprises a metal sheet connected to the rotor case 11 by a press fit connection.

10. Household appliance comprising an EC motor (100) according to one of claims 1 to 6, or a fan (1000) according to one of claims 6 - 9.

## Patentansprüche

1. Elektronisch kommutierter (EC-) Motor (100), der als Außenläufermotor ausgelegt ist und Folgendes umfasst:
- einen Rotor (10), der ein Rotorgehäuse (11) und einen oder mehrere an dem Rotorgehäuse (11) befestigte Permanentmagneten (12) umfasst,
- einen Stator (20),
- eine Welle (30),
- ein Lagersystem (50), an dem das Rotorgehäuse (11) um die Welle (30) drehbar gelagert ist, und
- ein Zwischenelement (40, 40'), das den Stator (20) mit der Welle (30) verbindet, so dass der Stator (20) zumindest teilweise an einem radialen Außenumfang des Lagersystems (50) angeordnet ist, wodurch das Zwischenelement (40, 40') den Stator (20) und die Welle (30) trennt, so dass diese Elemente dann keinen direkten Kontakt haben,
- und wobei das Zwischenelement (40, 40') aus einem anderen Material ist als die Welle (30), wodurch das Zwischenelement (40, 40') zumindest teilweise aus einem elastischen Material, insbesondere einem Kunststoffmaterial, hergestellt ist,
- **dadurch gekennzeichnet, dass** eine Verbindung des Zwischenelements (40, 40') mit der Welle (30) so ausgelegt ist, dass sie Vibrationen absorbiert, wobei die Verbindung so ausgelegt ist, dass sie in einer vorgesehenen Rotationsrichtung des Rotors, d.h. in Umfangsrichtung, elastisch ist, und wodurch die Elastizität der Verbindung des Zwischenelements (40, 40') mit der Welle (30) in Umfangsrichtung größer ist als in axialer Richtung und wobei die Steifigkeit des mit der Welle (30) verbundenen Zwischenelements (40, 40') in einer senkrecht zur Rotationsrichtung verlaufenden Richtung geringer ist als in axialer Richtung.

2. EC-Motor nach Anspruch 1, wobei das Zwischenelement (40) einen Abschnitt umfasst, der zwischen dem Stator (20) und dem Rotorgehäuse (11) verläuft.

3. EC-Motor nach Anspruch 1 oder 2, wobei das Zwischenelement (40, 40') an einer Statorfläche (20s) befestigt ist, die zur Welle (30) weist.

4. EC-Motor nach einem der vorhergehenden Ansprüche, wobei das Zwischenelement (40') zumindest teilweise als Kunststoffumspritzung aufgebaut ist.

5. EC-Motor nach einem der vorhergehenden Ansprüche, wobei das Rotorgehäuse (11) zumindest teilweise aus einem tiefgezogenen Metallteil hergestellt ist.

6. EC-Motor nach einem der vorhergehenden Ansprüche, wobei der eine oder die mehreren Permanentmagneten (12) mindestens einen anisotropen Ferritmagneten umfassen.

7. Lüfter (1000) mit einem EC-Motor (100) nach einem der vorhergehenden Ansprüche und einem Lüfterrad (200), das mit dem Rotorgehäuse (11) des EC-Motors (100) verbunden ist.

8. Lüfter nach Anspruch 7, wobei das Lüfterrad (200) eine Umspritzung zumindest eines Abschnitts des Rotorgehäuses (11) umfasst.

9. Lüfter nach Anspruch 7 oder 8, wobei das Lüfterrad (200') ein Blech umfasst, das über eine Presssitzverbindung mit dem Rotorgehäuse 11 verbunden ist.

10. Haushaltsgerät mit einem EC-Motor (100) nach einem der Ansprüche 1 bis 6 oder einem Lüfter (1000) nach einem der Ansprüche 6 - 9.

## Revendications

1. Moteur (100) à commutation électronique (EC), conçu comme moteur à rotor externe, comprenant
- un rotor (10) comprenant un carter de rotor (11) et un ou plusieurs aimants permanents (12) qui sont fixés au carter de rotor (11),
- un stator (20),
- un arbre (30),
- un système de palier (50) supportant de manière rotative le carter de rotor (11) autour de l'arbre (30), et
- un élément intermédiaire (40, 40') reliant le stator (20) à l'arbre (30) de telle sorte que le stator (20) est agencé au moins partiellement dans une circonférence radialement extérieure du système de palier (50), moyennant quoi l'élément intermédiaire (40, 40') sépare le stator (20) et l'arbre (30), de telle sorte que ces éléments n'ont ainsi aucun contact direct,
- et dans lequel l'élément intermédiaire (40, 40') est constitué d'un matériau différent de celui de l'arbre (30), moyennant quoi l'élément intermédiaire (40, 40') est au moins partiellement constitué d'un matériau élastique, en particulier d'un matériau plastique,
- **caractérisé en ce qu'**une connexion de l'élément intermédiaire (40, 40') avec l'arbre (30) est conçue pour absorber les vibrations, dans lequel ladite connexion est configurée pour être élastique dans une direction de rotation désignée du rotor, c'est-à-dire dans la direction circonférentielle, et moyennant quoi l'élasticité de la connexion de l'élément intermédiaire (40, 40') avec l'arbre (30) est plus grande dans la direction circonférentielle que dans la direction axiale, et dans lequel la rigidité de l'élément intermédiaire (40, 40') relié à l'arbre (30) est plus petite dans une direction normale à la direction de rotation que dans la direction axiale.

2. Moteur EC selon la revendication 1, dans lequel l'élément intermédiaire (40) comprend une partie s'étendant entre le stator (20) et le carter de rotor (11).

3. Moteur EC selon l'une des revendications 1 ou 2, dans lequel l'élément intermédiaire (40, 40') est fixé sur une surface statorique (20s) qui fait face à l'arbre (30).

4. Moteur EC selon l'une des revendications précédentes, dans lequel l'élément intermédiaire (40') est réalisé au moins partiellement sous forme de surmoulage plastique.

5. Moteur EC selon l'une des revendications précédentes, dans lequel le carter de rotor (11) est constitué au moins partiellement d'une pièce métallique emboutie.

6. Moteur EC selon l'une des revendications précédentes, dans lequel le un ou plusieurs aimants permanents (12) comprend/comprennent au moins un aimant anisotrope en ferrite.

7. Ventilateur (1000) comprenant un moteur EC (100) selon l'une des revendications précédentes, et une roue de ventilateur (200) reliée au carter de rotor (11) du moteur EC (100).

8. Ventilateur selon la revendication 7, dans lequel la roue de ventilateur (200) comprend un surmoulage d'au moins une partie du carter de rotor (11).

9. Ventilateur selon l'une des revendications 7 ou 8, dans lequel la roue de ventilateur (200') comprend une tôle reliée au carter de rotor 11 par une liaison par emmanchement à force.

10. Appareil électroménager comprenant un moteur EC (100) selon l'une des revendications 1 à 6, ou un ventilateur (1000) selon l'une des revendications 6 à 9.
